# EUROPEAN PATENT APPLICATION

(11) **EP 3 279 786 A1**
(43) Date of publication of application: **07.02.2018**
(21) Application number: 17184783.3
(22) Date of filing: 03.08.2017
(51) Int. Cl.: G06F 3/0488, G06F 3/0481

(54) **TERMINAL CONTROL METHOD AND DEVICE, AND TERMINAL**

(30) Priority: 05.08.2016 CN 201610639244
(71) Applicant: Beijing Xiaomi Mobile Software Co., Ltd., Beijing 100085 (CN)
(72) Inventor: JIANG, Zhongsheng, Beijing, Beijing 100085 (CN); TANG, Ju, Beijing, Beijing 100085 (CN); WANG, Gang, Beijing, Beijing 100085 (CN)
(74) Representative: dompatent von Kreisler Selting Werner - Partnerschaft von Patent- und Rechtsanwälten mbB

(57) **Abstract**

The present disclosure relates to a terminal control method and device, and a terminal. The method includes that: a touch signal generated in an edge region of a touch screen is detected; and in response to detection of the touch signal, if the touch screen currently displays an Application (APP) interface, a preset APP operation corresponding to the touch signal is executed, and if the touch screen currently displays a terminal desktop, display positions of desktop icons displayed on the touch screen are adjusted so that a plurality of desktop icons outside a preset single-hand controlled region are displayed in the single-hand controlled region. According to the embodiments of the present disclosure, a more convenient interaction manner is provided for a user, and the user may control an APP or the desktop icons more conveniently in a single-hand control manner.

## Description

### TECHNICAL FIELD

The present disclosure generally relates to the technical field of terminals, and more particularly, to a terminal control method and device, and a terminal.

### BACKGROUND

Along with rapid development of a terminal technology, a touch screen configured to a terminal is increasingly enlarged. Enlargement of a touch screen may bring better visual experiences to a user, but also makes it difficult for the user to conveniently operate a terminal with a single hand. For example, the user may implement control over the terminal only by holding and operating the terminal with double hands or holding the terminal with one hand and operating the terminal with the other hand.

However, a user may sometimes expect to or have to hold and control the terminal with a single hand, but limited finger lengths may only perform an operation over a region with a limited area, and may not conveniently control a display content on the whole touch screen.

### SUMMARY

Accordingly, an embodiment of the present disclosure provides a terminal control method and device, and a terminal, in accordance with claims which follow.

According to a first aspect of the embodiment of the present disclosure, there is provided a terminal control method, which may be applied to a terminal including a touch screen, the method including that:
detecting a touch signal generated in an edge region of the touch screen; and
in response to detection of the touch signal, if the touch screen currently displays an Application (APP) interface, executing a preset APP operation corresponding to the touch signal, and if the touch screen currently displays a terminal desktop, adjusting display positions of desktop icons displayed on the touch screen so that a plurality of desktop icons outside a preset single-hand controlled region are displayed in the single-hand controlled region.

In the present disclosure, the touch signal generated in the edge region of the touch screen is detected, so that the corresponding APP operation may be executed when the touch screen displays the APP interface, and the positions of the desktop icons may also be adjusted to adjust a part of the desktop icons in the single-hand region when the touch screen displays the desktop icons. According to the embodiment of the present disclosure, a more convenient interaction manner is provided for a user, and the user may control an APP or the desktop icons more conveniently in a single-hand control manner. Therein, the single-hand controlled region can be understood as a pre-configured region on the display that a user can hold the terminal with one hand and touch this region with the same hand easily. Further, the term edge region can be understood as a region on the display that adjoins a border of the terminal.

According to an exemplary embodiment, detecting the touch signal generated in the edge region of the touch screen may include that:

detecting the touch signal generated in the edge region of the touch screen through one or more sensors distributed in the edge region of the touch screen.

According to an exemplary embodiment, detecting the touch signal generated in the edge region of the touch screen may include that:
determining whether electronic equipment is held by a single hand, and if the electronic equipment is held by the single hand, detecting the touch signal generated in the edge region of the touch screen.

In the present disclosure, before the touch signal generated in the edge region of the touch screen is detected, it is determined whether the terminal is currently held by the single hand, the touch signal is detected if YES, and if NO, the touch signal is not detected. Since all operation objects displayed on a display screen may usually be controlled when the terminal is held by double hands, so that resource waste caused by continuous detection of the touch signal generated in the edge region may be avoided, and an effect of saving resources is achieved.

According to an exemplary embodiment, adjusting the display positions of the desktop icons displayed on the touch screen may include that:
swapping the display positions of the desktop icons displayed outside the single-hand controlled region with display positions of desktop icons displayed in the single-hand controlled region.

In the present disclosure, the positions of the desktop icons may be swapped to adjust the desktop icons outside the single-hand controlled region into the single-hand controlled region, so that the user may control the APP or the desktop icons more conveniently in the single-hand control manner.

According to an exemplary embodiment, swapping the display positions of the desktop icons displayed outside the single-hand controlled region with the display positions of the desktop icons displayed in the single-hand controlled region may include that:

swapping the display positions of the desktop icons outside the single-hand controlled region with the display positions of the desktop icons in the single-hand controlled region according to a preset cyclic arrangement manner, the cyclic arrangement manner comprising: a manner of cyclically moving desktop icons of each column according to a preset column interval, a manner of cyclically moving desktop icons of each row according to a preset row interval or a manner of moving each desktop icon by a preset interval.

In the present disclosure, cyclic movement of the desktop icons of each column according to the preset column interval, cyclic movement of the desktop icons of each row according to the preset row interval or movement of each desktop icon by the preset icon interval may be implemented, so that the desktop icons may be moved more flexibly in multiple different cyclic movement manners, and meanwhile, movement efficiency may be improved.

According to an exemplary embodiment, the touch signal may include one or more of the following signals:
a signal generated during a swipe from the edge region of the touch screen to the middle of the touch screen;
a signal generated during a swipe from the middle of the touch screen to the edge region of the touch screen; and
a signal generated during a swipe on the edge region of the touch screen according to a swipe trajectory.

According to a second aspect of the embodiment of the present disclosure, there is provided a terminal control device, which may be applied to a terminal including a touch screen, the device including:
a detection module, configured to detect a touch signal generated in an edge region of the touch screen; and
a processing module, configured to, when the touch signal is detected, if the touch screen currently displays an APP interface, execute a preset APP operation corresponding to the touch signal, and if the touch screen currently displays a terminal desktop, adjust display positions of desktop icons displayed on the touch screen so that a plurality of desktop icons outside a preset single-hand controlled region are displayed in the single-hand controlled region.

The advantages and technical effects of the device according to the invention correspond to those of the method presented above.

According to a particular embodiment, the detection module may include:
a first detection sub-module, configured to detect the touch signal generated in the edge region of the touch screen through one or more sensors distributed in the edge region of the touch screen.

According to a particular embodiment, the detection module may include:
a second detection sub-module, configured to determine whether electronic equipment is held by a single hand, and if the electronic equipment is held by the single hand, detect the touch signal generated in the edge region of the touch screen.

According to a particular embodiment, the processing module may include:
a desktop icon swap sub-module, configured to swap the display positions of the desktop icons displayed outside the single-hand controlled region with the display positions of desktop icons displayed in the single-hand controlled region.

According to a particular embodiment, the desktop icon swap sub-module may include:
a cyclic arrangement sub-module, configured to swap the display positions of the desktop icons outside the single-hand controlled region are swapped with the display positions of the desktop icons in the single-hand controlled region according to a preset cyclic arrangement manner, the cyclic arrangement manner including: a manner of cyclically moving the desktop icons of each column according to a preset column interval, a manner of cyclically moving the desktop icons of each row according to a preset row interval or a manner of moving each desktop icon by a preset interval.

According to a particular embodiment, the touch signal may include one or more of the following signals:
a signal generated during a swipe from the edge region of the touch screen to the middle of the touch screen;
a signal generated during a swipe from the middle of the touch screen to the edge region of the touch screen; and
a signal generated during a swipe on the edge region of the touch screen according to a swipe trajectory.

According to a third aspect of the embodiment of the present disclosure, there is provided a device, which may include:
a processor; and
a memory configured to store instructions executable by the processor,
herein the processor may be configured to:
   detect a touch signal generated in an edge region of a touch screen; and
   in response to detection of the touch signal, if the touch screen currently displays an APP interface, execute a preset APP operation corresponding to the touch signal, and if the touch screen currently displays a terminal desktop, adjust display positions of desktop icons displayed on the touch screen so that a plurality of desktop icons outside a preset single-hand controlled region are displayed in the single-hand controlled region.

In one particular embodiment, the steps of the terminal control method are determined by computer program instructions.

Consequently, according to a fourth aspect, the disclosure is also directed to a computer program for executing the steps of a terminal control method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1A is a flow chart showing a terminal control method, according to an exemplary embodiment of the present disclosure.
Fig. 1B is a structure diagram of an smart terminal, according to an exemplary embodiment of the present disclosure.
Fig. 1C is a schematic diagram illustrating a reader APP, according to an exemplary embodiment of the present disclosure.
Fig. 1D is a schematic diagram illustrating a terminal desktop, according to an exemplary embodiment of the present disclosure.
Fig. 1E is a schematic diagram illustrating interfaces before and after desktop icons are adjusted, according to an exemplary embodiment.
Fig. IF is another schematic diagram illustrating interfaces before and after desktop icons are adjusted, according to an exemplary embodiment.
Fig. 1G is another schematic diagram illustrating interfaces before and after desktop icons are adjusted, according to an exemplary embodiment.
Fig. 2 is a block diagram of a terminal control device, according to an exemplary embodiment of the present disclosure.
Fig. 3 is a block diagram of another terminal control device, according to an exemplary embodiment of the present disclosure.
Fig. 4 is a block diagram of another terminal control device, according to an exemplary embodiment of the present disclosure.
Fig. 5 is a block diagram of another terminal control device, according to an exemplary embodiment of the present disclosure.
Fig. 6 is a block diagram of another terminal control device, according to an exemplary embodiment of the present disclosure.
Fig. 7 is a block diagram of a terminal control device, according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Terms used in the present disclosure are intended not to limit the present disclosure but only to describe a purpose of a specific embodiment. "A", "said" and "the", used in the present disclosure and the appended claims, indicating a singular form are also intended to include a plural form unless their meanings are clearly represented. It also should be understood that term "and/or" used in the present disclosure refers to and includes any or all possible combinations of one or more associated listed items.

It is to be understood that various kinds of information may be described by adopting terms such as first, second and third in the present disclosure, but the information should not be limited to these terms. These terms are only adopted to distinguish the information of the same type. For example, without departing from the scope of the present disclosure, first information may also be called second information, and similarly, the second information may also be called the first information. It depends on a context, and for example, word "if" used here may be explained as "when" or "while" or "in response to determination".

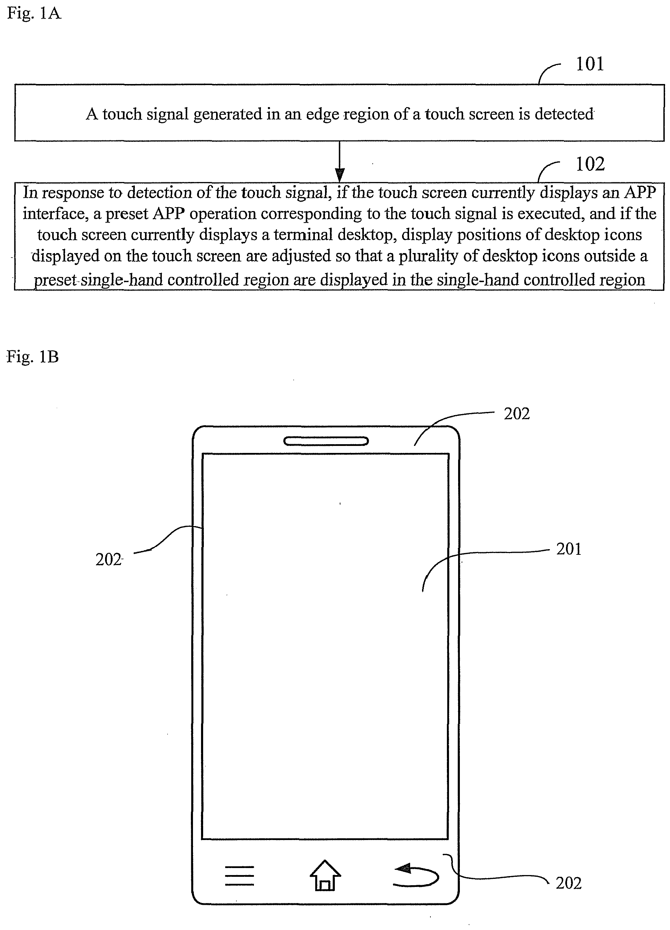

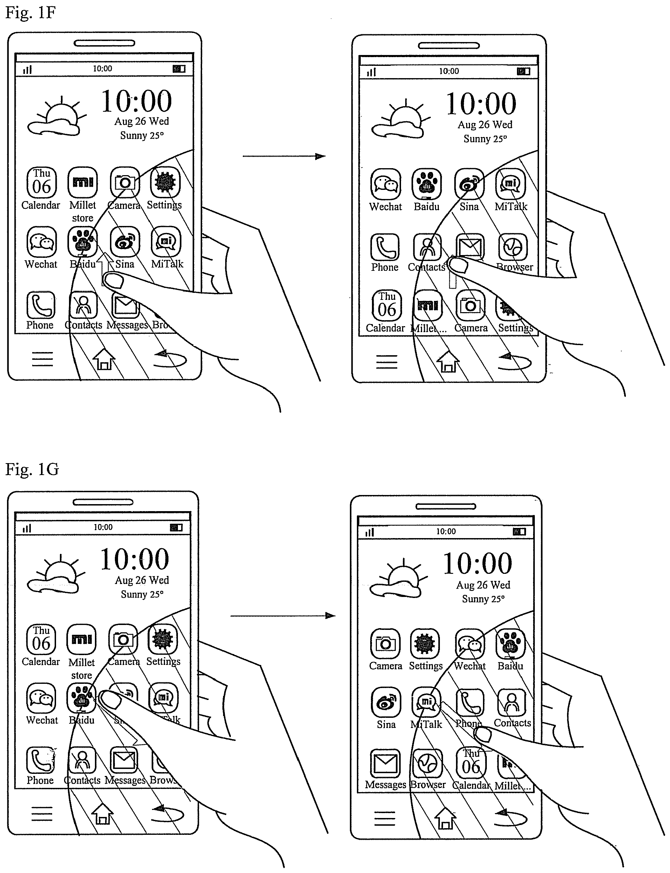

As shown in Fig. 1A, Fig. 1A is a flow chart showing a terminal control method, according to an exemplary embodiment of the present disclosure. The method is applied to a terminal including a touch screen, and includes the following Step 101 to 102.

In Step 101, a touch signal generated in an edge region of the touch screen is detected.

The terminal including the touch screen in the embodiment of the present disclosure may be an smart terminal such as an smart mobile phone, a tablet computer, a Personal Digital Assistant (PDA), an electronic book reader and a multimedia player.

The edge region of the touch screen of the embodiment refers to a region where the touch screen of the terminal is connected with a border of the terminal. When a user executes a touch operation on a touch region, the smart terminal may detect a touch gesture of the user over the edge region, generate the touch signal according to the touch gesture and respond according to the touch signal. After a keyboard and the touch screen, the smart terminal provides a novel interaction manner for the user.

In an optional implementation mode, the step that the touch signal generated in the edge region of the touch screen is detected may include that:
the touch signal generated in the edge region of the touch screen is detected through one or more sensors distributed in the edge region of the touch screen.

Referring to the structure diagram of the smart terminal shown in Fig. 1B, for example, the smart terminal in Fig. 1B is an smart mobile phone, and it can be understood that the smart terminal may also be multiple other types of terminals with touch screens, such as a tablet computer, an electronic book reader or multimedia play equipment. Wherein, except the touch screen 201, the region connected with the border of the terminal is the edge region 202, and the edge region 202 may be full of sensors, so that the sensors in the edge region 202 may receive touch signals when the user execute touch operations on the region except the touch screen. Wherein, the sensors in the touch screen may be capacitive sensors, and may also be other sensors, which is not limited in the embodiment.

Wherein, the touch signal may include at least one of a signal generated during a swipe from the edge region of the touch screen to the middle of the touch screen, a signal generated during a swipe from the middle of the touch screen to the edge region of the touch screen, and a signal generated during a swipe on the edge region of the touch screen according to a swipe trajectory.

In an optional implementation mode, before an arrangement triggering event on the terminal is detected, whether the terminal is currently in a held state or not may also be detected to determine whether the terminal is currently held by a single hand or not, and if the terminal is currently held by the single hand, detection of the touch signal generated in the edge region of the touch screen is started. The terminal may detect triggering of the user over a virtual key on the screen or a physical key on the terminal or automatically detect a holding and control manner of the user to determine whether the terminal is currently held by the single hand. Of course, those skilled in the art may also determine whether the terminal is currently held by the single hand in other manners, and these solutions may all be applied to the technical solutions of the present disclosure, which is not limited by the present disclosure.

During a practical application, the operation that detection of the touch signal generated in the edge region of the touch screen is started if the terminal is held by the single hand may be implemented by controlling the sensor in the edge region to be started to sense the touch signal. When it is determined that the terminal is not in a single-hand held state, the sensor in the edge region may be controlled to be stopped and not sense the touch signal.

In the embodiment, before the touch signal generated in the edge region of the touch screen is detected, it is also determined whether the terminal is currently held by the single hand, the touch signal is detected if YES, and if NO, the touch signal is not detected. Since all operation objects displayed on a display screen may usually be controlled when the terminal is held by double hands, so that the embodiment may avoid resource waste caused by continuous detection of the touch signal generated in the edge region, and an effect of saving resources is achieved.

In Step 102, in response to detection of the touch signal, if the touch screen currently displays an APP interface, a preset APP operation corresponding to the touch signal is executed, and if the touch screen currently displays a terminal desktop, display positions of desktop icons displayed on the touch screen are adjusted so that a plurality of desktop icons outside a preset single-hand controlled region are displayed in the single-hand controlled region. Therein, the single-hand controlled region can be understood as a pre-configured region on the display that a user can hold the terminal with one hand and touch this region with the same hand easily.

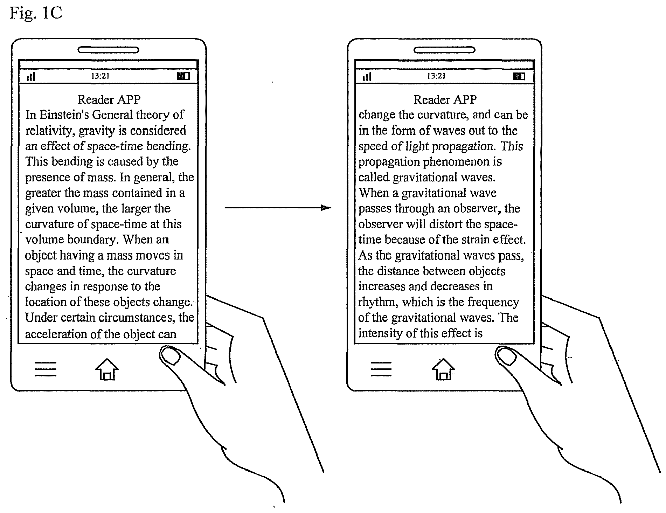

In the embodiment, the single-hand controlled region is a preset controllable region on the terminal when the user holds the terminal with the single hand. If the display screen displays the APP interface, the preset APP operation may be executed on an APP. For example, for a reader APP, the preset APP operation may be a page turning operation, and for a music player APP, the preset APP operation may be an operation of playing the next song and the like. During a practical application, the preset APP operation may be flexibly configured, which is not limited in the embodiment. As shown in Fig. 1C, schematically for example, for a reader APP, when the reader APP displays a book, a page turning operation is usually triggered by a swipe operation. When the user holds the terminal with the single hand, since it is more convenient for control of the user in the edge region, a corresponding APP operation may be pre-configured for the touch signal generated in the edge region, and a more convenient interaction manner is provided for the user.

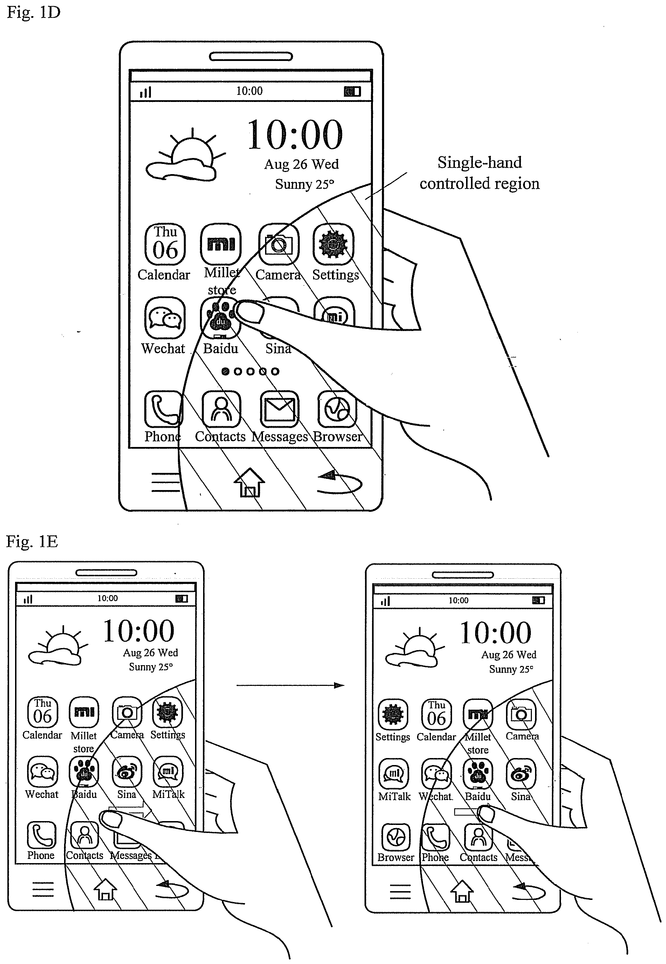

If the display screen displays the terminal desktop, Fig. 1D is a schematic diagram illustrating a terminal desktop, and when the user holds and controls the terminal with the single hand, for example, holding with the right hand and implementing control with the thumb, the single-hand controlled region shown in Fig. 1D may be formed on the display screen of the terminal, and the single-hand controlled region may cover only a part of the desktop icons, while other operation objects located on a left side and an upper part may not be covered and operated. In the embodiment, the display positions of the desktop icons are adjusted to adjust a part of desktop icons outside the single-hand controlled region into the single-hand region, thereby enabling the user to effectively control the desktop icons displayed on the display screen.

In an optional implementation mode, the step that the display positions of the desktop icons displayed on the touch screen are adjusted may include that:
the display positions of the desktop icons displayed outside the single-hand controlled region are swapped with the display positions of desktop icons displayed in the single-hand controlled region.

In the embodiment, the desktop icons in the single-hand controlled region are swapped with the desktop icons outside the single-hand controlled region, so that the user may conveniently control the desktop icons. During specific swaps, there are multiple implementation manners, for example, a manner of integrally moving the desktop icons outside the single-hand controlled region into the single-hand controlled region directly for position swap with the desktop icons in the single-hand controlled region, or a manner of cyclically moving the display positions of the desktop icons in a cyclic arrangement manner.

In an optional implementation mode, the step that the display positions of the desktop icons displayed outside the single-hand controlled region are swapped with the display positions of the desktop icons displayed in the single-hand controlled region may include that:
the display positions of the desktop icons outside the single-hand controlled region are swapped with the display positions of the desktop icons in the single-hand controlled region according to a preset cyclic arrangement manner, the cyclic arrangement manner including: a manner of cyclically moving the desktop icons of each column according to a preset column interval, a manner of cyclically moving the desktop icons of each row according to a preset row interval or a manner of moving each desktop icon by a preset interval.

In the embodiment of the present disclosure, the manner of regulating the desktop icons in the cyclic arrangement manner may make position regulation of the desktop icons more flexible. Wherein, the cyclic arrangement manner may include manners below.

First: the desktop icons of each column are cyclically moved according to the preset column interval, that is, the desktop icons of each column are moved leftwards or rightwards by the preset column interval. The preset column interval may be preset, and for example, is set to be one column or multiple columns.

Fig. 1E is a schematic diagram illustrating interfaces before and after desktop icons are adjusted, according to an exemplary embodiment. In the embodiment, the preset column interval is set to be one column, and during a practical application, the original desktop icons of a first column to a second column, the original desktop icons of the second column may be moved to a third column, the original desktop icons of the third column may be moved to a fourth column, and the original desktop icons of the fourth column may be moved to the first column.

Second: the desktop icons of each row are cyclically moved according to the preset row interval, that is, the desktop icons of each row are cyclically moved upwards or downwards according to the preset row interval, that is, the desktop icons of each row are moved upwards or downwards by the preset row interval. The preset row interval may be preset, and for example, is set to be one row or multiple rows.

Fig. IF is another schematic diagram illustrating interfaces before and after desktop icons are adjusted, according to an exemplary embodiment. In the embodiment, the preset row interval is set to be one row, and during a practical application, the original desktop icons of a third row to a second row, the original desktop icons of the second row may be moved to a first row, and the original desktop icons of the first row may be moved to the third row.

Third: each desktop icon is sequentially moved by the preset icon interval. For example, current display positions of the desktop icons may be numbered, and each desktop icon is sequentially moved by the preset icon interval according to the current arrangement positions of the icons, that is, the desktop icons may be cyclically moved according to numbers and the preset icon interval. For example, when the preset icon interval is set to be one icon position, the desktop icon at position 1 may be moved to position 2, the original desktop icon at position 2 may be moved to position 3, and so on; and the desktop icon at position 1 may also be moved to a last position, the desktop icon at position 2 may be moved to position 1, the desktop icon at position 3 may be moved to position 2, and so on.

Descriptions will be made with an example. If the preset icon interval is two icon positions, each desktop icon is sequentially moved by two icon positions. Fig. 1G is another schematic diagram illustrating interfaces before and after desktop icons are adjusted, according to an exemplary embodiment. A sequence of desktop icons before movement is: "calendar", "Millet store", "Camera", "Settings", "Wechat", "Baidu", "Sina", "MiTalk", "Phone", "Contacts", "Messages" and "Browser". Positions of each desktop icon are sequentially moved by two icon positions, and a sequence of the desktop icons after movement is: "Camera", "Settings", "Wechat", "Baidu", "Sina", "MiTalk", "Phone", "Contacts", "Messages", "Browser", "calendar" and "Millet store".

Corresponding to the abovementioned embodiment of the terminal control method, the present disclosure also provides embodiments of a terminal control device and a terminal applying it.

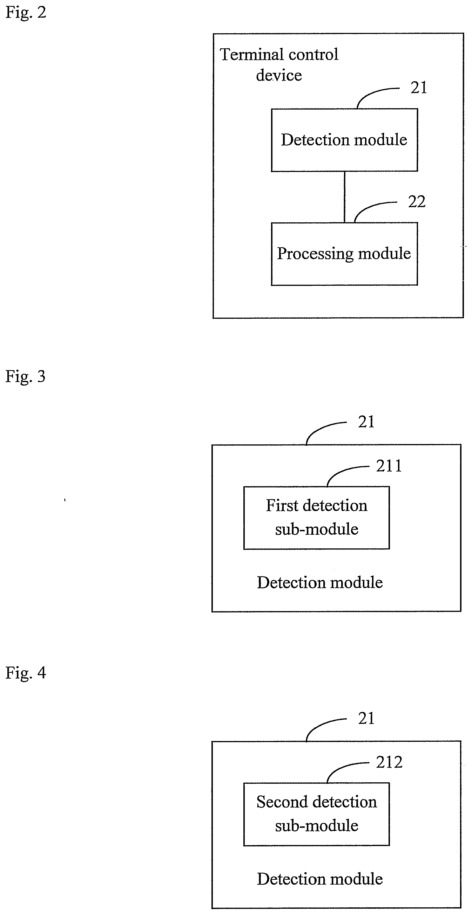

As shown in Fig. 2, Fig. 2 is a block diagram of a terminal control device, according to an exemplary embodiment of the present disclosure. The device is applied to a terminal including a touch screen, and includes: a detection module 21 and a processing module 22.

The detection module 21 is configured to detect a touch signal generated in an edge region of the touch screen.

The processing module 22 is configured to, when the touch signal is detected, if the touch screen currently displays an APP interface, execute a preset APP operation corresponding to the touch signal, and if the touch screen currently displays a terminal desktop, adjust display positions of desktop icons displayed on the touch screen so that a plurality of desktop icons outside a preset single-hand controlled region are displayed in the single-hand controlled region.

From the abovementioned embodiment, the touch signal generated in the edge region of the touch screen is detected, so that the corresponding APP operation may be executed when the touch screen displays the APP interface, and the positions of the desktop icons may also be adjusted to adjust a part of the desktop icons in the single-hand region when the touch screen displays the desktop icons. According to the embodiment of the present disclosure, a more convenient interaction manner is provided for a user, and the user may control an APP or the desktop icons more conveniently in a single-hand control manner.

As shown in Fig. 3, Fig. 3 is a block diagram of another terminal control device, according to an exemplary embodiment of the present disclosure. On the basis of the embodiment shown in Fig. 2, the detection module 21 includes: a first detection sub-module 211.

The first detection sub-module 211 is configured to detect the touch signal generated in the edge region of the touch screen through one or more sensors distributed in the edge region of the touch screen.

As shown in Fig. 4, Fig. 4 is a block diagram of another terminal control device, according to an exemplary embodiment of the present disclosure. On the basis of the embodiment shown in Fig. 2, the detection module 21 includes: a second detection sub-module 212.

The second detection sub-module 212 is configured to determine whether electronic equipment is held by a single hand, and if the electronic equipment is held by the single hand, detect the touch signal generated in the edge region of the touch screen.

From the abovementioned embodiment, before the touch signal generated in the edge region of the touch screen is detected, it is determined whether the terminal is currently held by the single hand, the touch signal is detected if YES, and if NO, the touch signal is not detected. Since all operation objects displayed on a display screen may usually be controlled when the terminal is held by double hands, so that resource waste caused by continuous detection of the touch signal generated in the edge region may be avoided, and an effect of saving resources is achieved.

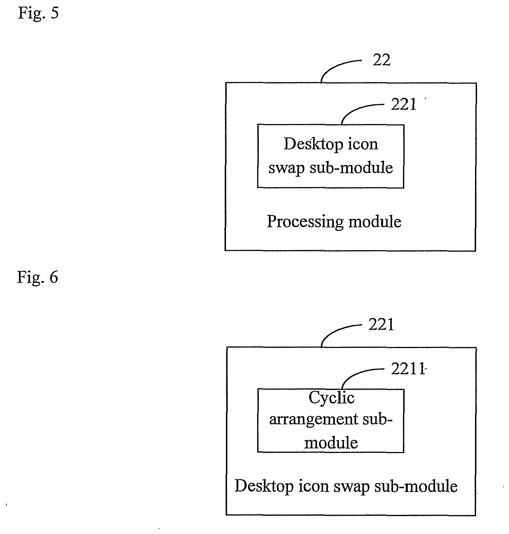

As shown in Fig. 5, Fig. 5 is a block diagram of another terminal control device, according to an exemplary embodiment of the present disclosure. On the basis of the embodiment shown in Fig. 2, the processing module 22 includes: a desktop icon swap sub-module 221.

The desktop icon swap sub-module 221 is configured to swap the display positions of the desktop icons displayed outside the single-hand controlled region with the display positions of desktop icons displayed in the single-hand controlled region.

From the abovementioned embodiment, the positions of the desktop icons may be swapped to adjust the desktop icons outside the single-hand controlled region into the single-hand controlled region, so that the user may control the APP or the desktop icons more conveniently in the single-hand control manner.

As shown in Fig. 6, Fig. 6 is a block diagram of another terminal control device, according to an exemplary embodiment of the present disclosure. On the basis of the embodiment shown in Fig. 5, the desktop icon swap sub-module 221 includes: a cyclic arrangement sub-module 2211.

The cyclic arrangement sub-module 2211 is configured to swap the display positions of the desktop icons outside the single-hand controlled region are swapped with the display positions of the desktop icons in the single-hand controlled region according to a preset cyclic arrangement manner, the cyclic arrangement manner including: a manner of cyclically moving the desktop icons of each column according to a preset column interval, a manner of cyclically moving the desktop icons of each row according to a preset row interval or a manner of moving each desktop icon by a preset interval.

From the abovementioned embodiment, cyclic movement of the desktop icons of each column according to the preset column interval, cyclic movement of the desktop icons of each row according to the preset row interval or movement of each desktop icon by the preset icon interval may be implemented, so that the desktop icons may be moved more flexibly in multiple different cyclic movement manners, and meanwhile, movement efficiency may be improved.

In an optional implementation mode, the touch signal includes one or more of the following signals:
a signal generated during a swipe from the edge region of the touch screen to the middle of the touch screen;
a signal generated during a swipe from the middle of the touch screen to the edge region of the touch screen; and
a signal generated during a swipe on the edge region of the touch screen according to a swipe trajectory.

Correspondingly, the present disclosure also provides a terminal, which includes: a processor; and a memory configured to store instructions executable by the processor, herein the processor is configured to:
detect a touch signal generated in an edge region of the touch screen; and
in response to detection of the touch signal, if the touch screen currently displays an APP interface, execute a preset APP operation corresponding to the touch signal, and if the touch screen currently displays a terminal desktop, adjust display positions of desktop icons displayed on the touch screen so that a plurality of desktop icons outside a preset single-hand controlled region are displayed in the single-hand controlled region.

Details about implementation processes of functions and effects of each module in the abovementioned device specifically refer to implementation processes of corresponding steps in the abovementioned method, and will not be elaborated herein.

Since the device embodiment substantially corresponds to the method embodiment, its related parts refer to a part of descriptions of the method embodiment. The device embodiment described above is only schematic, herein the modules described as separate parts may or may not be physically separated, and parts displayed as modules may or may not be physical modules, and namely may be located in the same place or may also be distributed to multiple network modules. Part or all of the modules may be selected to achieve the purpose of the solutions of the present disclosure according to a practical requirement. Those skilled in the art may understand and implement under the condition of no creative work.

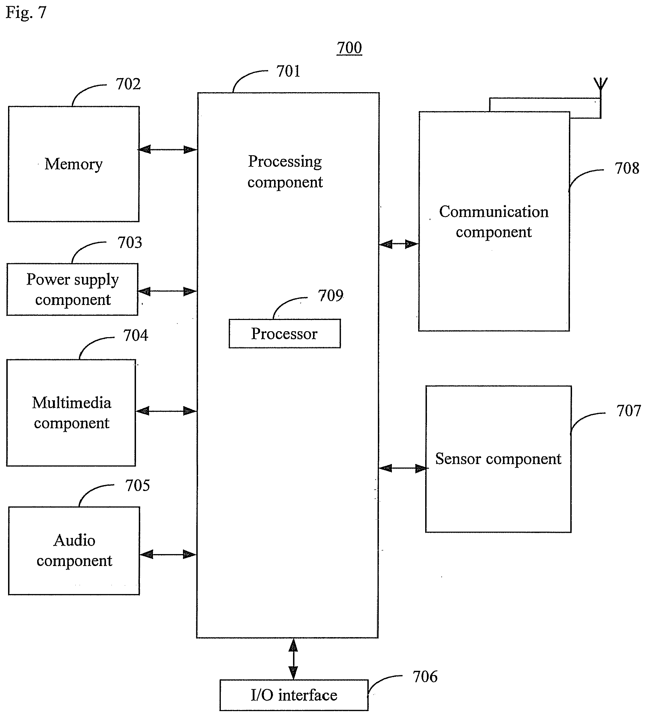

Fig. 7 is a structure diagram of a device for executing music switching on the basis of wearable equipment, according to an exemplary embodiment.

Fig. 7 is a structure diagram of a device 700 for executing music switching on the basis of wearable equipment, according to an exemplary embodiment. the device 700 may be a terminal such as a computer, a mobile phone, a digital broadcast terminal, a messaging device, a gaming console, a tablet, a medical device, exercise equipment and a PDA.

Referring to Fig. 7, the device 700 may include one or more of the following components: a processing component 701, a memory 702, a power supply component 703, a multimedia component 704, an audio component 705, an Input/Output (I/O) interface 706, a sensor component 707, and a communication component 708.

The processing component 701 typically controls overall operations of the device 700, such as the operations associated with display, telephone calls, data communications, Camera operations, and recording operations. The processing component 701 may include one or more processors 709 to execute instructions to perform all or part of the steps in the abovementioned method. Moreover, the processing component 701 may include one or more modules which facilitate interaction between the processing component 702 and the other components. For instance, the processing component 701 may include a multimedia module to facilitate interaction between the multimedia component 704 and the processing component 701.

The memory 702 is configured to store various types of data to support the operation of the device 700. Examples of such data include instructions for any APP programs or methods operated on the device 700, contact data, phonebook data, messages, pictures, video, etc. The memory 702 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power supply component 703 provides power for various components of the device 700. The power supply component 703 may include a power management system, one or more power supplies, and other components associated with the generation, management and distribution of power for the device 700.

The multimedia component 704 includes a screen providing an output interface between the device 700 and a user. In some embodiments, the screen may include a Liquid Crystal Display (LCD). The screen includes a Touch Panel (TP), and the screen is implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 704 includes a front Camera and/or a rear Camera. The front Camera and/or the rear Camera may receive external multimedia data when the device 700 is in an operation mode, such as a photographing mode or a video mode. Each of the front Camera and the rear Camera may be a fixed optical lens system or have focusing and optical zooming capabilities.

The audio component 705 is configured to output and/or input an audio signal. For example, the audio component 705 includes a Microphone (MIC), and the MIC is configured to receive an external audio signal when the device 700 is in the operation mode, such as a call mode, a recording mode and a voice recognition mode. The received audio signal may be further stored in the memory 702 or sent through the communication component 708. In some embodiments, the audio component 705 further includes a speaker configured to output the audio signal.

The I/O interface 702 provides an interface between the processing component 701 and a peripheral interface module, and the peripheral interface module may be a keyboard, a click wheel, a button and the like. The button may include, but not limited to: a home button, a volume button, a starting button and a locking button.

The sensor component 707 includes one or more sensors configured to provide status assessment in various aspects for the device 700. For instance, the sensor component 707 may detect an on/off status of the device 700 and relative positioning of components, such as a display and small keyboard of the device 700, and the sensor component 707 may further detect a change in a position of the device 700 or a component of the device 700, presence or absence of contact between the user and the device 700, orientation or acceleration/deceleration of the device 700 and a change in temperature of the device 700. The sensor component 707 may include a proximity sensor configured to detect presence of an object nearby without any physical contact. The sensor component 707 may also include a light sensor, such as a Complementary Metal Oxide Semiconductor (CMOS) or Charge Coupled Device (CCD) image sensor, configured for use in an imaging application. In some embodiments, the sensor component 707 may also include an acceleration sensor, a gyroscope sensor, a magnetic sensor, a pressure sensor or a temperature sensor.

The communication component 708 is configured to facilitate wired or wireless communication between the device 700 and another device. The device 700 may access a communication-standard-based wireless network, such as a Wireless Fidelity (Wi-Fi) network, a 2nd-Generation (2G) or 3rd-Generation (3G) network or a combination thereof. In an exemplary embodiment, the communication component 708 receives a broadcast signal or broadcast associated information from an external broadcast management system through a broadcast channel. In an exemplary embodiment, the communication component 708 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 702 including an instruction, and the instruction may be executed by the processor 709 of the device 700 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

Wherein, when the instruction in the storage medium is executed by the processor, the device 700 may execute a terminal control method, which includes that:
a touch signal generated in an edge region of a touch screen is detected; and
in response to detection of the touch signal, if the touch screen currently displays an APP interface, a preset APP operation corresponding to the touch signal is executed, and if the touch screen currently displays a terminal desktop, display positions of desktop icons displayed on the touch screen are adjusted so that a plurality of desktop icons outside a preset single-hand controlled region are displayed in the single-hand controlled region.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

The above are only the preferred embodiments of the present disclosure and not intended to limit the present disclosure and any modifications, equivalent replacements, improvements and the like made within the scope of the present disclosure.

## Claims

1. A terminal control method, applied to a terminal comprising a touch screen, **characterized in that**, the method comprises:
detecting (101) a touch signal generated in an edge region of the touch screen; and
in response to detection of the touch signal (102), if the touch screen currently displays an Application (APP) interface, executing a preset APP operation corresponding to the touch signal, and if the touch screen currently displays a terminal desktop, adjusting display positions of desktop icons displayed on the touch screen so that a plurality of desktop icons outside a preset single-hand controlled region are displayed in the single-hand controlled region.

2. The method according to claim 1, wherein detecting the touch signal generated in the edge region of the touch screen comprises:
detecting the touch signal generated in the edge region of the touch screen through one or more sensors distributed in the edge region of the touch screen.

3. The method according to claim 1, wherein detecting the touch signal generated in the edge region of the touch screen comprises:
determining whether electronic equipment is held by a single hand, and if the electronic equipment is held by the single hand, detecting the touch signal generated in the edge region of the touch screen.

4. The method according to claim 1, wherein adjusting the display positions of the desktop icons displayed on the touch screen comprises:
swapping the display positions of the desktop icons displayed outside the single-hand controlled region with display positions of desktop icons displayed in the single-hand controlled region.

5. The method according to claim 4, wherein swapping the display positions of the desktop icons displayed outside the single-hand controlled region with the display positions of the desktop icons displayed in the single-hand controlled region comprises:
swapping the display positions of the desktop icons outside the single-hand controlled region with the display positions of the desktop icons in the single-hand controlled region according to a preset cyclic arrangement manner, the cyclic arrangement manner comprising: a manner of cyclically moving desktop icons of each column according to a preset column interval, a manner of cyclically moving desktop icons of each row according to a preset row interval or a manner of moving each desktop icon by a preset interval.

6. The method according to any one of claims 1-5, wherein the touch signal comprises one or more of the following signals:
a signal generated during a swipe from the edge region of the touch screen to the middle of the touch screen;
a signal generated during a swipe from the middle of the touch screen to the edge region of the touch screen; and
a signal generated during a swipe on the edge region of the touch screen according to a swipe trajectory.

7. A terminal control device, applied to a terminal comprising a touch screen, **characterized in that**, the device comprises:
a detection module (21), configured to detect a touch signal generated in an edge region of the touch screen; and
a processing module (22), configured to, when the touch signal is detected, if the touch screen currently displays an Application (APP) interface, execute a preset APP operation corresponding to the touch signal, and if the touch screen currently displays a terminal desktop, adjust display positions of desktop icons displayed on the touch screen so that a plurality of desktop icons outside a preset single-hand controlled region are displayed in the single-hand controlled region.

8. The device according to claim 7, wherein the detection module (21) comprises:
a first detection sub-module (211), configured to detect the touch signal generated in the edge region of the touch screen through one or more sensors distributed in the edge region of the touch screen.

9. The device according to claim 7, wherein the detection module (21) comprises:
a second detection sub-module (212), configured to determine whether electronic equipment is held by a single hand, and if the electronic equipment is held by the single hand, detect the touch signal generated in the edge region of the touch screen.

10. The device according to claim 7, wherein the processing module (22) comprises:
a desktop icon swap sub-module (221), configured to swap the display positions of the desktop icons displayed outside the single-hand controlled region with display positions of desktop icons displayed in the single-hand controlled region.

11. The device according to claim 10, wherein the desktop icon swap sub-module (221) comprises:
a cyclic arrangement sub-module (2211), configured to swap the display positions of the desktop icons outside the single-hand controlled region with the display positions of the desktop icons in the single-hand controlled region according to a preset cyclic arrangement manner, the cyclic arrangement manner comprising: a manner of cyclically moving desktop icons of each column according to a preset column interval, a manner of cyclically moving desktop icons of each row according to a preset row interval or a manner of moving each desktop icon by a preset interval.

12. The device according to any one of claims 7-11, wherein the touch signal comprises one or more of the following signals:
a signal generated during a swipe from the edge region of the touch screen to the middle of the touch screen;
a signal generated during a swipe from the middle of the touch screen to the edge region of the touch screen; and
a signal generated during a swipe on the edge region of the touch screen according to a swipe trajectory.

13. A terminal, **characterized in that**, the terminal comprises:
a processor; and
a memory configured to store instructions executable by the processor,
wherein the processor is configured to:
detect a touch signal generated in an edge region of a touch screen; and
in response to detection of the touch signal, if the touch screen currently displays an Application (APP) interface, execute a preset APP operation corresponding to the touch signal, and if the touch screen currently displays a terminal desktop, adjust display positions of desktop icons displayed on the touch screen so that a plurality of desktop icons outside a preset single-hand controlled region are displayed in the single-hand controlled region.

14. A computer program including instructions for executing the steps of a terminal control method according to any one of claims 1 to 6 when said program is executed by a computer.

15. A recording medium readable by a computer and having recorded thereon a computer program including instructions for executing the steps of a terminal control method according to any one of claims 1 to 6.
